# EUROPÄISCHE PATENTSCHRIFT

(11) **EP 2 460 688 B1**
(45) Veröffentlichungstag und Bekanntmachung des Hinweises auf die Patenterteilung: **07.01.2015**
(21) Anmeldenummer: 11466037.6
(22) Anmeldetag: 28.11.2011
(51) Int. Cl.: B60R 5/04

(54) **Verankerungssystem eines ausbaubaren Profils**
Anchoring system of a removable profile
Système d'ancrage d'un profil démontable

(30) Priorität: 02.12.2010 CZ 20100889
(43) Veröffentlichungstag der Anmeldung: 06.06.2012
(73) Patentinhaber: Skoda Auto a.s., 293 60 Mladá Boleslav (CZ)
(72) Erfinder: Novotny, Josef, 51801 (CZ); Langr, David, CZ 51702 (CZ)

(56) Entgegenhaltungen:
- DE-A1- 4 414 397
- DE-U1- 9 004 661
- FR-A1- 2 912 097
- US-A- 5 676 415

## Beschreibung

### Technisches Gebiet

Die Erfindung betrifft das Verankerungssystem eines ausbaubaren Profils, insbesondere eines Verstaukastens mit dem Abdeckrollo und/oder Sicherheitstrennnetz im Kofferraum des Fahrzeuges, das beständig gegen das Lösen beim Aufprall ist.

### Bisheriger Stand der Technik

Derzeit sind verschiedene quer im Fahrzeugkofferraum eingebaute Verankerungssysteme des Verstaukastens bekannt, in dem das Sicherheitstrennnetz und/oder Abdeckrollo aufgewickelt ist. Eine der Lösungen ist die Verwendung von Endstücken, die am Verstaukasten axial verschiebbar gelagert sind und in die im Fahrzeug angeordneten Halterungen eingreifen. Die Endstücke werden durch eine Feder von dem Verstaukasten weggedrückt und weisen an ihrer Frontseite in der Regel Vorsprünge auf, die mit den Ausnehmungen in den Halterungen übereinstimmen. Die Feder schieben die Endstücke durch eigene Vorspannung in die verankerte Stellung ein. Beim Einbau ins Fahrzeug werden die Endstücke zueinander gedrückt, also zum Verstaukastenmitte hin, der Verstaukasten wird in die Halterungen eingeschoben und nach dem Loslassen der Endstücke werden diese unter Einwirkung der Feder vom Verstaukasten weggedrückt und mit ihren Vorsprüngen in den Ausnehmungen der Halterungen versperrt. Durch geeignete Formgebung der Vorsprünge kann der Einbau derart vereinfacht werden, dass nur ein Endstück des Verstaukastens in die Halterung eingeschoben und der zweite Endstück des Verstaukastens nach der Überwindung der Federkraft in die zweite Halterung eingedrückt wird. Nach dem Loslösen des Verstaukastens aus der Verankerung muss in der Regel mindestens ein Endstück zur Verstaukastenmitte hin gedrückt werden, bis der Vorsprung des Endstückes aus der Ausnehmung der Halterung ausfährt und der Verstaukasten dann aus den Halterungen entnommen werden kann.

Im eingebauten Zustand ist die Stellung des Verstaukastens im Kofferraum nur über die Feder arretiert, die an beiden Seiten mit gleicher Steifigkeit angeordnet sind, sodass bei Abwesenheit der auf das Fahrzeug einwirkenden Seitenkräften der Verstaukasten gegenüber den Halterungen zentriert ist. Die Endstücke werden so mit gleicher Kraft in die Halterungen eingedrückt.

Der Nachteil solcher Befestigung liegt in seiner geringen Beständigkeit gegenüber den zusätzlichen Seitenkräften, die in der Längsachsenrichtung des Verstaukastens wirken. Solche Kräfte können typischerweise als Folge eines Seiten- oder Offsetaufpralls des Fahrzeuges entstehen, bei dem zusammen mit der Verlangsamung in der Längsrichtung auf das Fahrzeug auch eine Quer- und Vertikalbeschleunigung einwirkt, die fast das Fünfzehnfache der Gravitationsbeschleunigung erreichen können. Auf den Verstaukasten wirkt in diesen Fällen eine beträchtliche aus dem großen Gewicht des Verstaukastens mit dem Aufwickelmechanismus eventuell auch mit dem Gewicht des aufgewickelten Rollos oder Netzes sich ergebende Trägheitskraft, die den Verstaukasten aus seiner ausgewogenen Mittelposition zu verschieben strebt. Die Trägheitskraft überwindet die Federkraft an der dem Aufprall zugewandten Seite, die Feder wird zusammengedrückt und der Verstaukasten zu einer Seite bzw. bis zum Anschlag des Endstückes verschoben. Somit wird die Distanz zwischen dem Endstück und dem Verstaukasten an gegenüberliegender Seite erhöht, was eine gefährliche Senkung der Federvorspannung an dieser Seite zur Folge hat. Das Endstück wird zur Halterung mit nicht ausreichender Kraft gedrückt und darüber hinaus wirken auf das Endstück auch die Trägheitskräfte ein, die es aus dem Formkontakt in der Halterung herauszuschieben versuchen. Infolgedessen kann das Endstück aus der Halterung herausrücken und die Befestigung des Verstaukastens versagen, was seine unkontrollierte Bewegung im Fahrzeuginnenraum und die Gefährdung der Insassen zur Folge haben kann.

Die derzeitigen Lösungen dieser Aufgabe sind in der Regel auf die Steigerung der Federvorspannung zwischen dem Endstück und dem Verstaukasten ausgerichtet, um genügende Vorspannung auch bei Einwirkung der Seitenkräfte zu sichern. Angesichts des Gewichtes des Verstaukastens und des Beschleunigungswertes ist jedoch die sichere Vorspannung der Feder zu hoch und dem Nutzer wird dadurch der Ein- und Ausbau des Verstaukastens sehr erschwert.

Aus dem Stand der Technik ist auch die Lösung EP 1844984 A2 bekannt, welche den oben genannten Befestigungsprinzip des Verstaukastens um eine Sicherungsvorrichtung ergänzt, die bei einer Zug- oder Biegebelastung des Netzes aktiviert wird, welche durch die nach einem Aufprall gegen das Netz geschleuderte Gegenstände verursacht wird. Die Sicherungsvorrichtung wird durch die Rasten gebildet, die aus dem Verstaukasten in die Verrastungen in der Fahrzeugkarosserie ausfahren und das Ausrücken des Verstaukastens aus der Verankerung infolge deren Durchbiegung unter der Belastung verhindern. Der Nachteil dieser Lösung liegt darin, dass sie nur bei ausgerolltem Netz und unter der Bedingung der Netzbelastung durch die Gegenstände aus dem Kofferraum funktioniert. Falls der Netz nicht ausgerollt oder belastet ist, wird die Sicherungsvorrichtung nicht aktiviert und der Verstaukasten gegen die Verschiebung ggü. den Endstücken und nachfolgendem Ausrücken aus der Halterung nicht besonders gesichert.

Aus dem Stand der Technik ist weiter das Gebrauchsmuster DE 90 04 661 U1 bekannt. Das Dokument offenbart ein Verankerungssystem eines ausbaubaren Profils, insbesondere eines Verstaukastens mit Abdeckrollo und/oder Sicherheitstrennnetz im Fahrzeugkofferraum, wobei das Profil die Anschläge, welche den Bereich seiner axialen Verschiebung gegenüber den Halterungen einschränken, und axial verschiebbare Endstücke aufweist, Mit diesen Endstücken ist er zu den im Fahrzeug angeordneten Halterungen befestigbar. Die Endstücke werden axial vom Profil zu den Halterungen hin mittels die Feder weggedrückt werden,

Dieser technischen Lösung fehlen verschiebbbare Endkappen des Profils, die leicht zu bedienten wären, und die einfachere Erzeugung des Verankerungssystems ermöglichen

### Darstellung der Erfindung

Die Aufgabe wird durch ein erfindungsgemäßes Verankerungssystem des ausbaubaren Profils gelöst, insbesondere eines Verstaukastens mit einem Abdeckrollo und/oder Sicherheitsnetz im Fahrzeugkofferraum. Das ausbaubare Profil weist axial angeordnete verschiebbare Endstücke auf, mit denen es zu den im Fahrzeug angeordneten Halterungen befestigbar ist. Die Endstücke werden axial vom Profil in Richtung zu den Halterungen mittels Feder weggedrückt. Das Profil weist Anschläge auf, welche den Bereich seiner axialen Verschiebung gegenüber den Halterungen einschränken. Bei Einwirkung einer Seitenkraft auf das Profil kann es sich aus der zentralen Stellung zu einer seiner Seiten hin nicht verschieben und die Federvorspannung an der gegenüberliegenden Seite wird nicht abgeschwächt. Dadurch wird an beiden Seiten ausreichende Andruckkraft an den Endstücken und die Verlässlichkeit der Verankerungen auch bei großen Seitenkräften bewahrt.

Der Bereich der axialen Verschiebung des Profils gegenüber den Halterungen ist vorteilhaft wesentlich geringer, als der Bereich der axialen Verschiebung des Endstücks gegenüber dem Profil. Zwischen den Anschlägen und Halterungen kann im Grunde nur das durch die Herrstelltoleranzen bedingte notwendige Spiel gelassen werden, damit der Nutzer das Profil einfach einbauen kann. Je geringer der Bereich der axialen Verschiebung des Profils gegenüber den Halterungen ist, desto geringer kann die Sicherheitsreserve der erhöhten, die Endstücke wegdrückenden Federvorspannung sein.

In einer vorteilhaften Ausführung weisen die Halterungen die Stützflächen auf, welche den Anschlägen entsprechen und sich senkrecht zur Längsachse des Profils erstrecken. Somit wird ein sicherer Kontakt des Anschlags mit der Halterung auch bei großen Seitenkraft mit einfacher Konstruktion erzielt.

Die Frontseiten der Endstücke weisen Verrastungen oder Vorsprünge auf, wobei die Halterungen geformte vertikale Flächen aufweisen, die mit der Form der Frontflächen der Endstücke übereinstimmen. Die Stützflächen sind in solchem Fall vorteilhaft als Bestandteil der Ausformung dieser vertikalen Flächen ausgebildet. Beim Umbau des Verankerungssystems nach dem Stand der Technik können als Stützflächen auch die bereits vorhandenen Flächen der Halterungen, beim Bedarf konstruktiv versteift, genutzt werden. So kann die erfindungsgemäße Lösung mit sehr geringen Kosten nur durch Austausch des ausbaubaren Profils bei den bestehenden Fahrzeugen genutzt werden.

Das Profil ist an seinen Enden mittels Stopfen abgeschlossen, in der ersten erfindungsgemäßen vorteilhaften Ausführung erstrecken sich dann die Anschläge von den Stopfen axial vom Profil hinweg. Die Endstücke weisen Öffnungen auf, die den Durchgang der Anschläge zu den Stützflächen ermöglichen. Somit wird eine kompakte Konstruktion erzielt, da die Anschläge nicht einmal im freien, nicht eingebauten Zustand aus den Endstücken störend herausragen. Erst bei der Verschiebung des Profils gegenüber dem Endstück fährt der Anschlag durch die Öffnung aus und stützt sich an der Stützfläche ab. Beim Bedarf können die Öffnungen an den Innenseiten der Endstücke als eine Führung für die Anschläge ausgebildet werden, damit ein reibungsloser Vorschub beider Endstücke gegenüber dem Profil beim Ein- und Ausbau sichergestellt wird.

Das erfindungsgemäße Profil bedeutet nicht nur den Verstaukasten mit dem Abdeckrollo und/oder Sicherheitsnetz, sondern beispielsweise auch andere Befestigungsquerträger, die zur Verankerung das Prinzip der gefederten Endstücke benutzen.

### Übersicht der Figuren der Zeichnungen

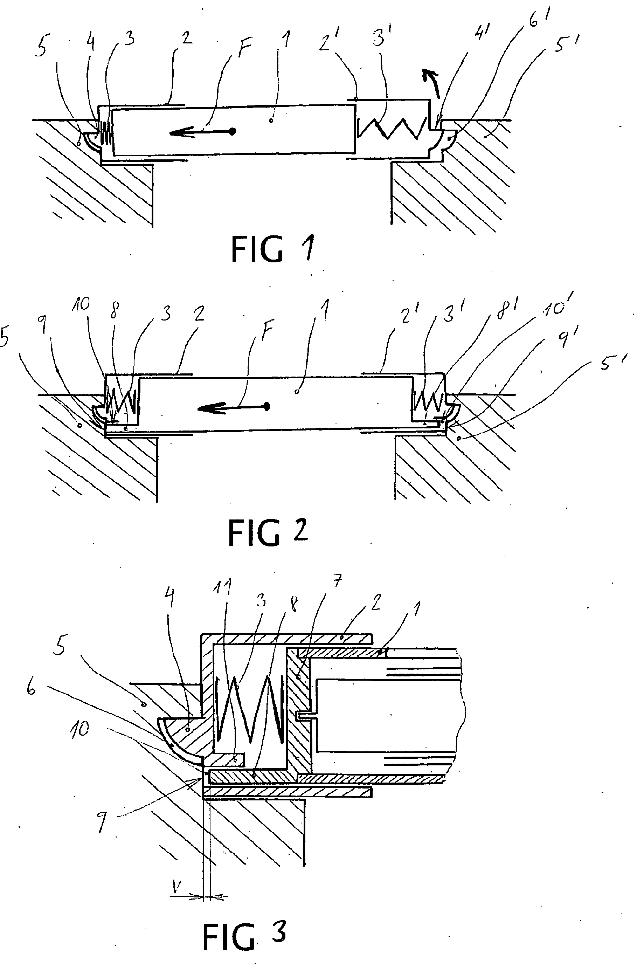

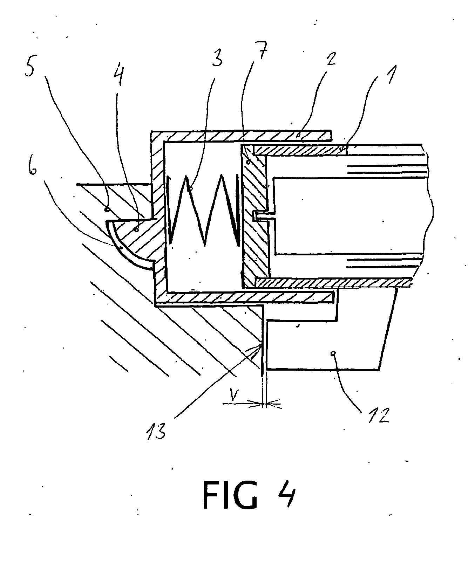

In der Fig. 1 ist schematisch die Ansicht des im Fahrzeugkofferraum verankerten Verstaukastens mit dem Abdeckrollo nach dem Stand der Technik unter Einwirkung der Seitenkräfte dargestellt. In der Fig. 2 ist die schematische Ansicht des erfindungsgemässen Verstaukastens unter Einwirkung der Seitenkräfte dargestellt. Die Fig. 3 stellt das Detail einer Seite des Verstaukastens nach dem ersten erfindungsgemässen Ausführungsbeispiel und die Fig. 4 das Detail einer Seite eines Verstaukastens der nicht zum Erfindungsgegenstand gehört, in beiden Fällen in einem mit Seitenkräften unbelasteten Gleichgewichtszustand.

### Ausführungsbeispiele der Erfindung

In der Fig. 1 ist der Verstaukasten **1** abgebildet, der im Fahrzeugkofferraum quer hinter den Fondsitzen verankert ist, auf den die Seitenkraft **F** einwirkt. Auf dem Verstaukasten **1** sind Endstücke **2, 2'** aufgesetzt, die im beschränkten Bereich auf diesem axial verschiebbar sind. Die Endstücke **2, 2'** werden durch die Druckfeder **3, 3'** vom Verstaukasten weggedrückt. An den Frontseiten der Endstücke sind Vorsprünge **4,4'** ausgebildet, welche in die Ausnehmungen **6,6'** an den im Fahrzeug ausgebildeten Halterungen **5,5'**eingreifen. Die Halter **5,5'** können in der Seitenverkleidung des Kofferraumes ausgebildet werden.

Die Kraft **F** überwindet die Vorspannung der Feder **3,** drückt diese zusammen und der Verstaukasten **1** verschiebt sich in der Richtung der Einwirkung der Kraft **F** hin zum Endstück **2.** Somit wird zugleich der Verstaukasten **1** an der gegenüberliegenden Seite vom Endstück **2'** weggedrückt. infolge dessen wird die zusammengedrückte Höhe der Feder **3'** erhöht und deren Vorspannung abgeschwächt. Der Endstück **3'** wird weiter nicht zur Halterung **5** mit notwendiger Kraft gedrückt und infolge der auf den Verstaukasten 1 einwirkenden Verlangsamung bzw. Beschleunigung in weiteren Richtungen rückt der Vorsprung **4'** aus der Ausnehmung **6'** aus und der Verstaukasten löst sich aus der Verankerung.

In Fig. 2 in ähnlicher Ansicht weist der Verstaukasten ein Verankerungssystem nach dem ersten Ausführungsbeispiel der Erfindung auf, in einem mit der Seitenkraft **F** unbelasteten Stand. In der Fig. 3 ist im Detailschnitt eine Seite des Verstaukastens **1** in dieser Ausführung dargestellt, in einer mit Seitenkraft unbelasteten Stellung. Der Verstaukasten **1** wird mit einem Stopfen **7** abgeschlossen, in dem drehbar die Aufwickeltrommel mit aufgewickeltem Rollo gelagert ist. Die Feder **3** ist zwischen dem Stopfen **7** und der Innenseite des Endstückes **2** eingespreizt. Von der dem Verstaukasten **1** abgewandten Frontseite des Stopfens **7** erstreckt sich in der Richtung vom Verstaukasten **1** zur Halterung **5** der Anschlag **8.** Die Halterung **5** weist unter der Ausnehmung **6** eine senkrechte Stützfläche **9** für den Anschlag **8** auf. Das Endstück **7** weist an seiner Frontseite eine Öffnung **10** für den Anschlag **8** auf und kann sich so axial gegenüber dem Verstaukasten **1** ähnlich wie bei der Ausführung nach dem Stand der Technik bewegen. Die Öffnung **10** wird in der Richtung zum Verstaukasten **1** mit einer Führung **11** fortgeführt, die das eventuelle Spreizen des Anschlags bei einer relativen Verschiebung des Endstückes **2** gegenüber dem Verstaukasten **1** im Rahmen ihrer gegenseitigen Toleranz verhindert. In einem mit der Seitenkraft **F** unbelasteten Gleichgewichtszustand des Verstaukastens ist der Anschlag **8** von der Stützfläche um das Spiel **v** entfernt. Die Größe des Spiels **v** wurde unter Berücksichtigung der Herstelltoleranzen der Montagebaugruppe des Verstaukastens **1** und des Fahrzeuges gewählt, damit der Einbau des Verstaukastens **1** ins Fahrzeug ermöglicht wird, und diese ist im Gleichgewichtszustand dank der gleichen Vorspannung der Feder **3, 3'** an beiden Seiten des Verstaukastens **1** gleich.

Bei der Belastung des Verstaukastens **1** mit der Seitenkraft **F** verschiebt sich der Verstaukasten **1** in der Richtung derer Einwirkung zu der Halterung **5** hin. Nach der Überwindung des Spiels **v** stützt sich der Anschlag **8** an der Stützfläche **9** ab und verhindert so die weitere Verschiebung des Verstaukastens **1.** Der Verstaukasten **1** verschiebt sich also nur um die Größe des Spiels **v.** An der gegenüberliegenden Seite des Verstaukastens **1** wird infolge dieser kleinen Entrückung des Endstückes **2'** vom Verstaukasten **1** die Vorspannung der Feder **3'** nur geringfügig abgeschwächt. Dadurch wird die Zuverlässigkeit der Verankerung des Verstaukastens **1** bewahrt, da beide Endstücke **2, 2'** mit ausreichender Kraft in die Halterungen **5, 5'** angedrückt werden.

In der Fig. 4 ist ein Detailschnitt einer Seite des Verstaukastens, der nicht zum Erfindungsgegenstand gehört, in einer mit Seitenkraft unbelasteten Gleichgewichtsstellung. Der Anschlag 12 ist zum Gehäuse des Verstaukastens 1 von seiner Unterseite z.B. mittels näher nicht abgebildeten Schrauben oder Nieten oder mittels eines Formkontaktes des geeignet ausgeformten Anschlags 12 mit den Öffnungen im Gehäuse des Verstaukastens 1 befestigt. Der Anschlag 12 kann auch seitlich am Gehäuse des Verstaukastens 1 befestigt werden, jedoch die Anordnung an seiner Unterseite ist vorteilhafter im Hinblick auf seine "Unsichtbarkeit" bei üblicher Fahrzeugnutzung. Der Anschlag 12 kann auch näher dem Ende des Verstaukastens 1 befestigt werden, in diesem Fall kann das Endstück 2 an seiner Unterseite einen Längseinschnitt für den Anschlag 12 aufweisen, damit eine uneingeschränkte Bewegung des Endstückes 2 gegenüber dem Verstaukasten 1 ermöglicht wird. Die Halterung 5 setzt unter dem Bereich für das Endstück 2 mit einer Stützfläche **13** für den Anschlag **12** fort. Als Stützfläche **13** kann direkt die Ausformung der Seitenverkleidung genutzt werden, beim Bedarf mit inneren Streben oder lokalen Verstärkung versteift. Im Gleichgewichtszustand ist der Anschlag **12** von der Stützfläche **13** um das Spiel **v** entfernt. Das Funktionsprinzip bei der Belastung mit der Seitenkraft **F** ist analog dem oben genannten ersten Ausführungsbeispiel der Erfindung.

### Gewerbliche Anwendbarkeit

Das Verankerungssystem des erfindungsgemäßen ausbaubaren Profils kann bei allen im Fahrzeug ausbaubar mittels axial abgefederten Endstücken eingebauten Profilkörper, insbesondere bei Verstaukasten mit Sicherheitstrennnetz und/oder Abdeckrollo des Kofferraumes genutzt werden.

## Patentansprüche

1. Ein Verankerungssystem des ausbaubaren Profils, insbesondere eines Verstaukastens mit Abdeckrollo und/oder Sicherheitstrennnetz im Fahrzeugkofferraum, wobei das Profil (1) die Anschläge (8, 8', 12, 12'), welche den Bereich seiner axialen Verschiebung gegenüber den Halterungen (5, 5') einschränken, und axial verschiebbare Endstücke (2, 2') aufweist, mit denen er zu den im Fahrzeug angeordneten Halterungen (5, 5') befestigbar ist und wobei die Endstücke (2, 2') axial vom Profil (1) zu den Halterungen (5, 5') hin mittels die Feder (3, 3') weggedrückt werden, **dadurch gekennzeichnet**, dassdas Profil (1) an seinen Enden mittels Stopfen (7, 7') abgeschlossen ist und dass sich die Anschläge (8, 8') von den Stopfen (7, 7') axial vom Profil (1) hinweg erstrecken, wobei die Endstücke (2, 2') die Öffnungen (10, 10') aufweisen, die den Durchgang der Anschläge (8, 8') zu den Stützflächen (9, 9') ermöglichen.

2. Ein Verankerungssystem des ausbaubaren Profils nach Anspruch 1, **dadurch gekennzeichnet, dass** der Bereich der axialen Verschiebung des Profils (1) gegenüber den Halterungen (5, 5') im Wesentlichen kleiner als der Bereich der axialen Verschiebung des Endstückes (2) gegenüber dem Profil (1) ist.

3. Ein Verankerungssystem des ausbaubaren Profils nach Anspruch 1, **dadurch gekennzeichnet, dass** die Halterungen (5, 5') die Stützflächen (9, 9', 13, 13') aufweisen, welche den Anschlägen (8, 8', 12, 12') entsprechen und dass die Stützflächen (9, 9', 13, 13') sich senkrecht zur Längsachse des Profils (1) erstrecken.

4. Ein Verankerungssystem des ausbaubaren Profils nach Anspruch 1, **dadurch gekennzeichnet, dass** die Frontseiten der Endstücke (2, 2') die Verrastungen oder Vorsprünge (4, 4') aufweisen und dass die Halterungen (5, 5') geformte vertikale Flächen aufweisen, die mit der Form der Frontflächen der Endstücke (2, 2') übereinstimmen, wobei die Stützflächen (9, 9') als Bestandteil der Ausformung dieser vertikalen Flächen ausgebildet sind.

5. Ein Verankerungssystem des ausbaubaren Profils nach Anspruch 1, **dadurch gekennzeichnet, dass** die Stützflächen (9, 9', 13, 13') an der Seitenverkleidung des Kofferraumes angeordnet sind.

## Claims

1. Anchoring system of the removable profile, in particular of a storage box with a covering roller blind and/or safety separating net in the vehicle luggage compartment, wherein the profile (1) has the stops (8, 8', 12, 12'), which limit the range of axial displacement of said profile in relation to the holders (5, 5'), and axially displaceable end pieces (2, 2') with which said profile is fastenable to the holders (5, 5') arranged in the vehicle, and wherein the end pieces (2, 2') are pushed away axially from the profile (1) towards the holders (5, 5') by means of the springs (3, 3'), **characterized in that** the profile (1) is closed at the ends thereof by means of stoppers (7, 7'), and **in that** the stops (8, 8') extend away from the stoppers (7, 7') axially from the profile (1), wherein the end pieces (2, 2') have the openings (10, 10') which permit the passage of the stops (8, 8') to the supporting surfaces (9, 9').

2. Anchoring system of the removable profile according to Claim 1, **characterized in that** the range of the axial displacement of the profile (1) in relation to the holders (5, 5') is substantially smaller than the range of the axial displacement of the end piece (2) in relation to the profile (1).

3. Anchoring system of the removable profile according to Claim 1, **characterized in that** the holders (5, 5') have the supporting surfaces (9, 9', 13, 13') which correspond to the stops (8, 8', 12, 12'), and **in that** the supporting surfaces (9, 9', 13, 13') extend perpendicularly to the longitudinal axis of the profile (1).

4. Anchoring system of the removable profile according to Claim 1, **characterized in that** the front sides of the end pieces (2, 2') have the latching means or projections (4, 4'),' and **in that** the holders (5, 5') have shaped vertical surfaces which correspond to the shape of the front surfaces of the end pieces (2, 2'), wherein the supporting surfaces (9, 9') are designed as part of the shaping of said vertical surfaces.

5. Anchoring system of the removable profile according to Claim 1, **characterized in that** the supporting surfaces (9, 9' 13, 13') are arranged on the side lining of the luggage compartment.

## Revendications

1. Système d'ancrage d'un profil démontable, en particulier d'un compartiment de rangement avec un volet déroulant de recouvrement et/ou un filet de séparation de sécurité dans l'espace du coffre d'un véhicule, le profil (1) présentant des butées (8, 8', 12, 12') qui limitent la plage de son déplacement axial par rapport à des fixations (5, 5') et des embouts déplaçables axialement (2, 2') avec lesquels il peut être fixé aux fixations (5, 5') disposées dans le véhicule, les embouts (2, 2') étant repoussés axialement depuis le profil (1) vers les fixations (5, 5') au moyen de ressorts (3, 3'), **caractérisé en ce que** le profil (1) est terminé au niveau de ses extrémités par des bouchons (7, 7') et **en ce que** les butées (8, 8') s'étendent depuis les bouchons (7, 7') axialement au-delà du profil (1), les embouts (2, 2') présentant des ouvertures (10, 10') qui permettent le passage des butées (8, 8') jusqu'à des surfaces de support (9, 9').

2. Système d'ancrage d'un profil démontable selon la revendication 1, **caractérisé en ce que** la plage de déplacement axial du profil (1) par rapport aux fixations (5, 5') est sensiblement plus petite que la plage de déplacement axial de l'embout (2) par rapport au profil (1).

3. Système d'ancrage d'un profil démontable selon la revendication 1, **caractérisé en ce que** les fixations (5, 5') présentent les surfaces de support (9, 9', 13, 13') qui correspondent aux butées (8, 8', 12, 12') et **en ce que** les surfaces de support (9, 9', 13, 13') s'étendent perpendiculairement à l'axe longitudinal du profil (1).

4. Système d'ancrage d'un profil démontable selon la revendication 1, **caractérisé en ce que** les côtés frontaux des embouts (2, 2') présentent des encliquetages ou des saillies (4, 4') et **en ce que** les fixations (5, 5') présentent des surfaces verticales façonnées qui correspondent à la forme des surfaces frontales des embouts (2, 2'), les surfaces de support (9, 9') étant réalisées en tant que composant de la formation de ces surfaces verticales.

5. Système d'ancrage d'un profil démontable selon la revendication 1, **caractérisé en ce que** les surfaces de suppôrt (9, 9', 13, 13') sont disposées sur l'habillage latéral de l'espace du coffre.
